# EUROPEAN PATENT APPLICATION

(11) **EP 3 985 756 A1**
(43) Date of publication of application: **20.04.2022**
(21) Application number: 21800191.5
(22) Date of filing: 07.05.2021
(51) Int. Cl.: H01M 4/13, H01M 4/62, H01M 4/66, H01M 4/139, H01M 10/058, H01M 10/052

(54) **LITHIUM-FREE BATTERY AND MANUFACTURING METHOD THEREFOR**

(30) Priority: 08.05.2020 KR 20200055158; 04.02.2021 KR 20210016114
(71) Applicant: LG Energy Solution, Ltd., Seoul 07335 (KR)
(72) Inventor: YUN, Hyunwoong, Daejeon 34122 (KR); HAH, Hoejin, Daejeon 34122 (KR)
(74) Representative: Hoffmann Eitle
(86) International application number: PCT/KR2021/005751
(87) International publication number: WO 2021/225414

(57) **Abstract**

The present disclosure provides a lithium free battery including a positive electrode, a negative electrode, a separator, and a lithium non-aqueous electrolyte, wherein the negative electrode includes a lithium-metal alloy substrate, and a lithium plate layer formed on the lithium-metallic alloy substrate, wherein the lithium-metal alloy substrate includes an alloy of lithium (Li) and at least one metal selected from the group consisting of Mg, Ca, Al, Si, Ge, Sn, Pb, As, Sb, Bi, Ag, Zn, Cd, P and Hg, and wherein an alloy ratio of the lithium and the metal is 4:1 to 1:4 on a weight basis, and a method for preparing the same.

## Description

### [TECHNICAL FIELD]

### Cross Citation with Related Application(s)

This application claims the benefit of Korean Patent Application No. 10-2020-0055158 filed on May 8, 2020 and Korean Patent Application No. 10-2021-0016114 filed on February 4, 2021 with the Korean Intellectual Property Office, the disclosures of which are incorporated herein by reference in their entirety.

The present disclosure relates to a lithium free battery and a method for preparing the same.

### [BACKGROUND ART]

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibits high charging/discharging characteristics, has a long cycle life, and is eco-friendly, and has been commercialized and widely used.

In general, a lithium secondary battery has a structure in which a non-aqueous electrolyte solution is impregnated into an electrode assembly including a positive electrode, a negative electrode, and a porous separator. Further, the positive electrode is generally prepared by coating a positive electrode mixture including a positive electrode active material onto aluminum foil, and the negative electrode is prepared by coating a negative electrode mixture including a negative electrode active material onto a copper foil.

Usually, the positive electrode active material uses a lithium transition metal oxide, and the negative active material uses a carbon-based material.

However, recently, as a negative electrode active material, a lithium metal battery using lithium metal itself has been commercialized. Furthermore, lithium free batteries, in which only a current collector is used as a negative electrode in the preparation of electrodes, lithium is provided from the positive electrode by electric discharge, and lithium metal is used as the negative electrode active material, are being actively studied. The lithium free batteries are considered as a battery concept that can achieve the highest energy density from the viewpoint of high energy density.

However, in the above-mentioned negative electrode, a lithium plate layer is formed on the current collector by deposition due to charge. At this time, a lithium plate layer having a low electrodeposition density is formed on the current collector, and the side reaction of the electrolyte solution is severe, causing quick deterioration of lifetime characteristics.

Therefore, there is a need to solve the above problems and develop a lithium free battery having an increased electrodeposition density of the lithium plate layer.

### [DETAILED DESCRIPTION OF THE INVENTION]

### [Technical Problem]

Accordingly, the present disclosure has been made to solve the above-mentioned problems and other technical problems that have yet to be resolved.

Specifically, an object of the present disclosure is to provide a lithium free battery in which a lithium plate layer having a high electrodeposition density can be formed on the negative electrode by a simpler method, thereby preventing side reactions of the electrolyte solution and improving lifetime characteristics.

Another object of the present disclosure is to provide additional lithium using a lithium-metal alloy substrate, thereby improving the lifetime characteristics.

### [Technical Solution]

In order to achieve the above object, according to one embodiment of the present disclosure, there is provided a lithium free battery comprising a positive electrode, a negative electrode, a separator, and a lithium non-aqueous electrolyte, wherein the negative electrode includes a lithium-metal alloy substrate, and a lithium plate layer formed on the lithium-metallic alloy substrate, and wherein the lithium-metal alloy substrate includes an alloy of lithium (Li) and at least one metal selected from the group consisting of Mg, Ca, Al, Si, Ge, Sn, Pb, As, Sb, Bi, Ag, Zn, Cd, P and Hg,
wherein an alloy ratio of the lithium and the metal is 4:1 to 1:4 on a weight basis.

The lithium plate layer is formed by charging the lithium free battery.

The lithium-metal alloy substrate may include an alloy of lithium and at least one metal selected from the group consisting of Si, Ge, Sn, Sb, Mg, Bi, As, Pb, P and Zn.

The lithium-metal alloy substrate may have a thickness of 3 *µ*m to 100 *µ*m.

The lithium-metal alloy substrate may have a thickness of 5 *µ*m to 40 *µ*m.

The lithium-metal alloy substrate may have an alloy ratio of lithium and metal of 2:1 to 1:2 on a weight basis.

According to another embodiment of the present disclosure, there is provided a method for preparing the lithium free battery, the method comprising the steps of: (a) forming a positive electrode mixture layer on at least one surface of a positive electrode current collector to prepare a positive electrode; (b) preparing a preliminary negative electrode composed of a lithium-metal alloy substrate which includes an alloy of lithium (Li) and at least one metal selected from the group consisting of Mg, Ca, Al, Si, Ge, Sn, Pb, As, Sb, Bi, Ag, Zn, Cd, P and Hg, and has an alloy ratio of lithium and metal of 4:1 to 1:4 on a weight basis, (c) disposing a separator between the positive electrode and the preliminary negative electrode to prepare an electrode assembly; and (d) housing the electrode assembly and the lithium non-aqueous electrolyte in a battery case, sealing the battery case, and then subjecting the sealed battery case to charging.

The lithium-metal alloy substrate may include an alloy of lithium and at least one metal selected from the group consisting of Si, Ge, Sn, Sb, Mg, Bi, As, Pb, P and Zn.

The lithium-metal alloy substrate may have a thickness of 3 *µ*m to 100 *µ*m.

The lithium-metal alloy substrate may have an alloy ratio of lithium and metal of 2:1 to 1:2 on a weight basis.

### [DETAILED DESCRIPTION OF THE EMBODIMENTS]

Hereinafter, the present disclosure will be described in more detail for promoting an understanding of the invention.

Terms and words used in this specification and claims should not be interpreted as limited to commonly used meanings or meanings in dictionaries and should be interpreted with meanings and concepts which are consistent with the technological scope of the invention based on the principle that the inventors have appropriately defined concepts of terms in order to describe the invention in the best way.

The term provided herein is merely used for the purpose of describing particular embodiments, and is not intended to be limiting of the present disclosure. The singular forms "a," "an," and "the" are intended to include the plural forms as well, unless the context clearly indicates otherwise.

Further, throughout the specification, when a portion is referred to as "including" a certain component, it means that the portion can further include other components, without excluding the other components, unless otherwise stated.

According to one embodiment of the present disclosure, there is provided a lithium free battery comprising a positive electrode, a negative electrode, a separator, and a lithium non-aqueous electrolyte, wherein the negative electrode includes a lithium-metal alloy substrate, and a lithium plate layer formed on the lithium-metallic alloy substrate, wherein the lithium-metal alloy substrate includes an alloy of lithium (Li) and at least one metal selected from the group consisting of Mg, Ca, Al, Si, Ge, Sn, Pb, As, Sb, Bi, Ag, Zn, Cd, P and Hg, and wherein an alloy ratio of the lithium and the metal is 4:1 to 1:4 on a weight basis.

At this time, the lithium-metal alloy substrate may include an alloy of lithium and at least one metal selected from the group consisting of Mg, Ca, Al, Si, Ge, Sn, Pb, As, Sb, Bi, Ag, Zn, Cd, P and Hg.

Such a lithium free battery has the effects of increasing the electrodeposition density of the lithium plate layer and reducing the specific surface area, thereby preventing side reactions of the electrolyte solution and improving the lifetime characteristics.

Specifically, the negative electrode of the present disclosure is a form in which a preliminary negative electrode is prepared using the lithium-metal alloy substrate, a lithium free battery is prepared using the preliminary negative electrode, and then subjected to charge to form a lithium plate layer on the lithium-metal alloy substrate, which is used as a negative electrode. Therefore, the lithium plate layer may be formed by charging the lithium-free battery.

The lithium-metal alloy substrate is prepared using a metal capable of forming an alloy with lithium, and the materials as described above may be used.

On the other hand, as the degree of alloying with lithium is higher, more specifically, as the volumetric energy density of the metal is higher, the amount of reaction with lithium relative to the same volume is greater. When such a lithium-metal alloy substrate is used, the electrodeposition density of the lithium plate layer formed thereafter may be further increased.

Therefore, among the lithium-metal alloy substrates, it is more preferable that the substrate is formed of a material having a higher volumetric energy density and a good degree of lithium-alloy. In detail, the lithium-metal alloy substrate may include an alloy of lithium and at least one metal selected from the group consisting of Si, Ge, Sn, Sb, Mg, Bi, As, Pb, P and Zn. In this case, the lithium-metal alloy substrate may be formed of an alloy of lithium and at least one metal selected from the group consisting of Si, Ge, Sn, Sb, Mg, Bi, As, Pb, P, and Zn. Such a metal may correspond to a material having a better degree of lithium alloy than Al, that is, a high volumetric energy density.

Here, the lithium-metal alloy substrate may comprise an alloy of the metal and lithium as described above, wherein the term 'comprising' refer to containing an alloy of the metal and the lithium at a level of 100%, or alternatively containing other metals as unavoidable impurities at a level equal to or less than 5% by weight, 3% by weight, or further at a level equal to or less than 1% by weight.

On the other hand, such a lithium-metal alloy substrate can be prepared by various methods, without being limited to a conventional method, and a pressing method, a deposition method, an electrolytic plating method, and the like can be employed.

The lithium-metal alloy substrate may have a thickness of 3 *µ*m to 100 *µ*m, specifically 5 *µ*m or more, 15 *µ*m or more, and 50 *µ*m or less, 40 *µ*m or less, 30 *µ*m or less.

When the lithium-metal alloy substrate has an excessively thin thickness outside the above range, a problem of lowering a strength occurs, the electrodeposition density of the lithium plate layer is not sufficiently high, and the specific surface area is increased, so that many side reactions of the electrolyte solution also occur, and the effect of the present disclosure cannot be achieved. On the contrary, when the lithium-metal alloy substrate is excessively thick, the entire volume increases, so that the volumetric energy density decreases, which is not desirable in terms of the capacity.

On the other hand, the lithium-metal alloy substrate has mor excellent electrical conductivity than Li metal, and thus can form a high-density lithium plate layer when Li from a positive electrode is electrodeposited. In addition, since it can be de-alloyed as much as Li alloyed in the current collector during discharge and transferred to the positive electrode, it is possible to improve the coulombic efficiency and to last the life longer.

Therefore, the alloy ratio of lithium and metal in the lithium-metal alloy substrate may be 4:1 to 1:4 on a weight basis. Specifically, in order to maximize the intended effect of the present disclosure, it may be 3:1 to 1:3, more specifically 2:1 to 1:2, and most specifically 2:1 to 1:2.

When the Li content is greater than 80% on a weight basis outside the above range, not only the Li electrodeposition density is low, but also Li is de-alloyed, so that the shape of the current collector is collapsed and a breakage phenomenon may occur. For this reason, in order to secure the safety associated with maintaining the shape of the current collector, it is most preferable to contain Li to a level equal to or less than 80%. In addition, when the Li content is less than 20% by weight outside the above range, due to the lithium-metal alloy substrate, the amount of excess Li, which is de-alloyed as much as Li alloyed in the current collector during discharge and transferred to the positive electrode, is too small, and thus the effect may be deteriorated.

On the other hand, the negative electrode in the lithium free battery according to the present disclosure further essentially comprises a lithium plate layer. When the lithium-metal alloy substrate as described above is used, the electrodeposition density of the lithium plate layer formed thereon may be 0.15 g/cm³ to 0.53 g/cm³.

This is also related to the thickness of the lithium-metal alloy substrate, and may vary depending on how the battery is constructed. However, when the electrodeposition density of the lithium plate layer is excessively low outside the above range, the lithium plating layer, which is vulnerable to reaction with the electrolyte solution, becomes excessively thick, many by-products are formed, and the internal resistance of the cell rapidly increases, which is not preferable. There is a theoretical limit to raising the electrodeposition density of the lithium plate layer beyond the above range.

Conventionally, the lithium plate layer has a low electrodeposition density, which causes problems such as side reactions of the electrolyte solution, and thus, there is a big limitation in its use. However, according to the present disclosure, by using a lithium-metal alloy substrate as a negative electrode current collector substrate, the electrodeposition density of the lithium plate layer can be increased without the need for improving the thickness of the substrate. Thus, by reducing the side reaction of the electrolyte solution while improving the entire capacity of the lithium free battery, and lithium of a lithium-metal alloy substrate can provide additional Li to the positive electrode to further improve lifetime characteristics.

On the other hand, according to another embodiment of the present disclosure, there is provided a method for preparing the lithium free battery, the method comprising the steps of: (a) forming a positive electrode mixture layer on at least one surface of a positive electrode current collector to prepare a positive electrode; (b) preparing a preliminary negative electrode composed of a lithium-metal alloy substrate which includes an alloy of lithium (Li) and at least one metal selected from the group consisting of Mg, Ca, Al, Si, Ge, Sn, Pb, As, Sb, Bi, Ag, Zn, Cd, P and Hg, and has an alloy ratio of lithium and metal of 4:1 to 1:4 on a weight basis, (c) disposing a separator between the positive electrode and the preliminary negative electrode to prepare an electrode assembly; and (d) housing the electrode assembly and the lithium non-aqueous electrolyte in a battery case, sealing the battery case, and then subjecting the sealed battery case to charging. Here, the lithium-metal alloy substrate may include an alloy of lithium (Li) and at least one metal selected from the group consisting of Mg, Ca, Al, Si, Ge, Sn, Pb, As, Sb, Bi, Ag, Zn, Cd, P and Hg.

Here, as described above, the lithium-metal alloy substrate may include, specifically, an alloy of lithium and at least one metal selected from the group consisting of Si, Ge, Sn, Sb, Mg, Bi, As, Pb, P and Zn and may have a thickness of 3 *µ*m to 100 *µ*m. Here, the lithium-metal alloy substrate may be made of an alloy of lithium and at least one metal selected from the group consisting of Si, Ge, Sn, Sb, Mg, Bi, As, Pb, P, and Zn.

Further, the lithium-metal alloy substrate may have an alloy ratio of lithium and metal of 3:1 to 1:3, ore specifically 2:1 to 1:2, and most specifically 2:1 to 1:2, on a weight basis.

Further, the lithium plate layer formed on the lithium-metal alloy substrate may have an electrodeposition density of 0.15 g/cm³ to 0.53 g/cm³.

Other specific details are the same as described above.

That is, the lithium free battery according to the present disclosure is prepared by a process in which a lithium-metal alloy substrate is used as a preliminary negative electrode, which is used to prepare an electrode assembly, and then the electrode assembly is housed in a battery case together with a lithium non-aqueous electrolyte, and the battery case is sealed and then subjected to charging, thereby forming a lithium plate layer onto the lithium-metal alloy substrate.

On the other hand, other components of the lithium-free battery will be described.

As described above, the positive electrode is prepared by forming a positive electrode mixture layer on at least one surface of the positive electrode current collector. Here, the positive electrode mixture layer includes a positive electrode active material, a binder, and a conductive material, and may optionally further include a filler.

The positive electrode current collector is not particularly limited as long as it has conductivity while not causing chemical changes in the battery, and for example, stainless steel, aluminum, nickel, titanium, fired carbon, or aluminum or stainless steel that is surface-treated with carbon, nickel, titanium, silver, or the like may be used. In addition, the positive electrode current collector may have a thickness of 3 *µ*m to 500 *µ*m, and can have fine irregularities formed on the surface of the current collector to increase the adhesion of the positive electrode active material. For example, it may be used in various forms such as films, sheets, foils, nets, porous bodies, foams, and nonwoven fabrics.

The positive electrode active material as the active material may be, for example, a layered compound such as lithium nickel oxide (LiNiO₂) or a compound substituted with one or more transition metals; lithium manganese oxides such as chemical formulae Li₁₊ₓMn₂₋ₓO₄ (where x is 0 to 0.33), LiMnO₃, LiMn₂O₃, LiMnO₂; lithium copper oxide (Li₂C_{U}O₂); vanadium oxides such as LiV₃O₈, LiFe₃O₄, V₂O₅, and C_{U2}V₂O₇; a Ni-site type lithium nickel oxide represented by chemical formula LiNi₁₋ₓMₓO₂ (where M = Co, Mn, Al, Cu, Fe, Mg, B or Ga, and x= 0.01 ~ 0.3); lithium manganese composite oxide represented by chemical formulae LiMn₂-ₓMₓO₂ (where M = Co, Ni, Fe, Cr, Zn or Ta, and x = 0.01 to 0.1) or Li₂Mn₃MO₈ (where M = Fe, Co, Ni, Cu or Zn ); LiMn₂O₄ with a portion of Li in the chemical formula substituted with an alkaline earth metal ion; a disulfide compound; Fe₂(MoO₄)₃, and the like, without being limited thereto, and materials known in the art can be used.

The binder is a component that assists in coupling of an active material, a conductive material, and the like, and in coupling of a current collector, and typically, may be added in an amount of 0.1 to 30% by weight, specifically 1 to 10% by weight, more specifically 1 to 5% by weight based on the total weight of the positive electrode mixture layer. An example of the binder may include polyvinylidene fluoride, polyvinylidene fluoride-hexafluoropropylene, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene polymer (EPDM), sulfonated EPDM, styrene-butadiene rubber, fluorine rubber, various copolymers, and the like.

The conductive material is generally added in an amount of 0.1 to 30% by weight, specifically 1 to 10% by weight, and more specifically 1 to 5% by weight, based on the total weight of the positive electrode mixture layer. The conductive material is not particularly limited as long as it has high conductivity without causing a chemical change in the battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; metal powders such as carbon fluoride powder, aluminum powder, and nickel powder; conductive whiskey such as zinc oxide and potassium titanate; conductive metal oxides such as titanium oxide; conductive materials such as polyphenylene derivatives may be used.

The filler is not particularly limited so long as it is a fibrous material that does not cause chemical changes in the corresponding battery, and for example, olefin-based polymers such as polyethylene and polypropylene; and fibrous materials such as glass fiber and carbon fiber are used.

The separator is an insulating thin film having high ion permeability and mechanical strength. The pore diameter of the separator is generally 0.01 to 10 *µ*m, and the thickness is generally 5 to 300 *µ*m. As such separator, for example, chemical resistant and hydrophobic olefin-based polymers such as polypropylene; sheets or non-woven fabrics made of glass fiber or polyethylenere is used. When a solid electrolyte such as a polymer is used as the electrolyte, the solid electrolyte may also serve as a separator.

The lithium non-aqueous electrolyte generally includes a lithium salt and a non-aqueous solvent. As the non-aqueous solvent, a non-aqueous organic solvent, an organic solid electrolyte, an inorganic solid electrolyte, or the like is used, but is not limited thereto.

As examples of the non-aqueous organic solvent, mention may be made of non-protic organic solvents, such as N-methyl-2-pyrollidinone, propylene carbonate, ethylene carbonate, butylene carbonate, dimethyl carbonate, diethyl carbonate, gamma-butyro lactone, 1,2-dimethoxy ethane, tetrahydroxyfuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups, and the like.

Examples of the inorganic solid electrolyte include nitrides, halides and sulfates of lithium (Li) such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂.

The lithium salt is a material that is readily soluble in the non-aqueous electrolyte. The lithium salt may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate, and imide.

In addition, in order to improve charge/discharge characteristics, flame retardancy and the like, the non-aqueous electrolyte may further include, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like. In some cases, in order to impart incombustibility, the electrolyte may further include halogen-containing solvents, such as carbon tetrachloride and ethylene trifluoride. Furthermore, in order to improve high-temperature retention characteristics, the electrolyte may further include carbon dioxide gas. In addition, it may further include fluoro-ethylene carbonate (FEC), propene sultone (PRS), and the like.

The battery case is not limited as long as it has a structure capable of housing an electrode assembly, and may be a pouch-type battery case, or a prismatic or cylindrical battery case made of a metal can, which is known in the art.

The charge may be a full charge, and then aging treatment is performed at high temperature and/or room temperature. Thus, a lithium plate layer is formed on the lithium-metal alloy substrate of the preliminary negative electrode.

Hereinafter, preferred examples of the present disclosure, comparative examples compared thereto, and test examples for evaluating them are described. However, it will be apparent to those skilled in the art that these examples are merely illustrative of the present disclosure, and various changes and modifications can be made within the scope and technical spirit of the present disclosure, and it goes without saying that such variations and modifications fall within the scope of the appended claims.

### <Example 1>

The lithium transition metal oxide (LiNi_{1/3}Co_{1/3}Mn_{1/3}O₂) was used as a positive electrode active material, PVdF as a binder, and Super-P as a conductive material. The positive electrode active material: the binder: the conductive material were added in a weight ratio of 96: 2: 2 to NMP to produce an active material slurry, which was then coated onto Al foil at 4 mAh/cm² per one side, dried in a dryer at 130°C under an air atmosphere, and then pressed to prepare a positive electrode.

A LiSn foil (weight ratio = 1:1) having a thickness of 30 *µ*m, a length of 40 mm, and a width of 60 mm was used as a preliminary negative electrode.

An SRS separator having a thickness of 20 *µ*m was assembled on the positive electrode and the preliminary negative electrode using a stacking method, the assembled electrode assembly was housed in an aluminum pouch-type battery case, a solution of fluorethylene carbonate (FEC) and ethylmethyl carbonate (EMC) in a volume ratio of 3:7 in which 1M LiFSI and 1M LiPF₆ were dissolved is injected, and then the battery case was sealed to prepare a monocell.

### <Example 2>

A monocell was prepared in the same manner as in Example 1, except that a LiSn foil (weight ratio = 1:1) having a thickness of 60 *µ*m was used as a preliminary negative electrode in Example 1.

### <Example 3>

A monocell was prepared in the same manner as in Example 1, except that a LiSi foil (weight ratio = 1:1) having a thickness of 30 *µ*m was used as a preliminary negative electrode in Example 1.

### <Example 4>

A monocell was prepared in the same manner as in Example 1, except that a LiAl foil (weight ratio = 1:1) having a thickness of 30 *µ*m was used as a preliminary negative electrode in Example 1.

### <Example 5>

A monocell was prepared in the same manner as in Example 1, except that a LiSn foil (weight ratio = 2:1) having a thickness of 30 *µ*m was used as a preliminary negative electrode in Example 1.

### <Example 6>

A monocell was prepared in the same manner as in Example 1, except that a LiSn foil (weight ratio = 3:1) having a thickness of 30 *µ*m was used as a preliminary negative electrode in Example 1.

### <Comparative Example 1>

A monocell was prepared in the same manner as in Example 1, except that a copper foil having a thickness of 30 *µ*m was used as a preliminary negative electrode in Example 1.

### <Comparative Example 2>

A monocell was prepared in the same manner as in Example 1, except that LiAl was laminated to a thickness of 3 *µ*m on a copper foil having a thickness of 27 *µ*m and used as a preliminary negative electrode in Example 1.

### <Comparative Example 3>

A monocell was prepared in the same manner as in Example 1, except that a LiSn foil (weight ratio = 5:1) having a thickness of 30 *µ*m was used as a preliminary negative electrode in Example 1.

### <Comparative Example 4>

A monocell was prepared in the same manner as in Example 1, except that LiSn foil (weight ratio = 1:5) having a thickness of 30 *µ*m was used as a preliminary negative electrode in Example 1.

### <Experimental Example 1>

The monocells prepared in Examples 1 to 6 and Comparative Examples 1 to 4 were charged under the following conditions, and then the monocells were disassembled to obtain the thickness and electrodeposition density of the lithium plate layer formed on the negative electrode, and the results are shown in Table 1 below..

### Charge: 0.2C, CC/CV, 4.25V, 1/20C cut-off

For the thickness of the plate layer, the average of the thicknesses was obtained by selecting two arbitrary points, and the electrodeposition density of the plate layer was digitalized by calculating the precipitation mass and precipitation volume.

**[Table 1]**

| | Thickness of plate layer(um) | Electrodeposition density (g/cc) |
|---|---|---|
| Example 1 | 47 | 0.22 |
| Example 2 | 39 | 0.25 |
| Example 3 | 41 | 0.24 |
| Example 4 | 60 | 0.17 |
| Example 5 | 50 | 0.20 |
| Example 6 | 55 | 0.18 |
| Comparat ive Example 1 | 100 | 0.10 |
| Comparat ive Example 2 | 65 | 0.16 |
| Comparat ive Example 3 | 64 | 0.16 |
| Comparat ive Example 4 | 67 | 0.15 |

| | | |
|---|---|---|
| (Theoretical density of lithium metal: 0.54g/cm³) | | |

Referring to Table 1, when the lithium-metal alloy substrate according to Examples 1 to 6 of the present disclosure is used as a preliminary negative electrode, the thickness of the lithium plate layer is thin and the density is improved, confirming that the lithium plate layer is formed more densely.

On the other hand, it is confirmed that Comparative Example 1 using Cu has almost no improvement in electrodeposition density, and that even when a lithium-metal alloy substrate is used with a very thin thickness (Comparative Example 2), or alternatively, even when the alloy ratio of lithium and metal is outside the scope of the present disclosure (Comparative Example 3), the effect of improving the electrodeposition density cannot be obtained sufficiently.

On the other hand, Example 4 using Al has a predetermined effect of improving the electrodeposition density, but the improvement effect is insignificant compared to Si, Sn or the like of Examples 1 to 3. Referring to Examples 5 and 6, it can be confirmed that the alloy ratio of lithium and metal also affects the improvement of the electrodeposition density.

From this, it can be confirmed that in order to sufficiently increase the electrodeposition density of the lithium plate layer and improve the battery performance, a lithium-metal alloy substrate having a sufficient thickness is required, and the type of metal to be alloyed and the alloy ratio of lithium and metal are also important.

### <Experimental Example 2>

The monocells of Examples 1 to 6 and Comparative Examples 1 to 4 were charged and discharged at 0.2 C, and the initial discharge capacity is measured. Charge and discharge were additionally performed under the following conditions, and then, the 100-time discharge capacity retention relative to the initial discharge capacity was calculated, and the results are shown in Table 2 below.

### Charge: 0.2C, CC / CV, 4.25V, 1 / 20C cut-off

### Discharge: 0.5C, CC, 3.0 V, cut-off

**[Table 2]**

| | initial capacity (mAh) | 100-time capacity retention (%) |
|---|---|---|
| Example 1 | 60.9 | 90 |
| Example 2 | 61.3 | 95 |
| Example 3 | 60.5 | 93 |
| Example 4 | 60.3 | 85 |
| Example 5 | 60.8 | 88 |
| Example 6 | 61.0 | 86 |
| Comparati ve Example 1 | 60.1 | 45 |
| Comparati ve Example 2 | 60.0 | 65 |
| Comparati ve Example 3 | 60.4 | 75 |
| Comparati ve Example 4 | 60.5 | 60 |

Referring to Table 2, it is confirmed in the case of Examples 1 to 6, the lifetime characteristics are excellent as the density of the plate layer is increased. In particular, it is confirmed that Example 2, in which the thickness of the current collector is thick, exhibits the best lifetime characteristics.

From the viewpoint of these results, it can be confirmed that when a current collector is prepared using a lithium-metal alloy substrate, the resistance of the current collector is small, so that the electrodeposition density is increased and the lifetime is improved. It can also be confirmed that in the case of Example 2 in which the current collector is thick, more excess Li is contained in the current collector, so that the lifetime characteristics are the most excellent.

In addition, it is confirmed that in the case of Comparative Example 2, in which the thickness of the lithium-metal alloy is small by using Cu and a lithium-metal alloy as a current collector, the lifetime characteristics are greatly inferior even though the electrodeposition density does not show a large difference from Example 4. This is also because the excess amount of Li is relatively small.

Moreover, from the results of Examples 1, 5, and 6 and Comparative Examples 3 and 4, it can be confirmed that the preferred alloy weight ratio of is lithium and metal is 4:1 to 1:4. More specifically, it can be confirmed that as the alloy weight ratio of lithium and metal is closer to 1:1, it is more effectively superior.

Those of ordinary skill in the field to which the invention pertains can make various applications and modifications within the scope of the invention based on the above contents.

### [industrial Applicability]

As described above, the lithium free battery according to an embodiment of the present disclosure uses an alloy substrate obtained by alloying a lithium and a metal capable of alloying with the lithium in a specific ratio as the negative electrode current collector substrate, so that the electrodeposition density of the lithium plate layer can be increased when forming a lithium plate layer by charging on such a lithium-metal alloy substrate, thereby minimizing side reactions with the electrolyte solution and improving lifetime characteristics.

In addition, lithium of a lithium-metal alloy substrate can perform the role of providing additional lithium to the positive electrode, thereby further improving lifetime characteristics.

## Claims

1. A lithium free battery comprising a positive electrode, a negative electrode, a separator, and a lithium non-aqueous electrolyte,
wherein the negative electrode comprise a lithium-metal alloy substrate, and a lithium plate layer formed on the lithium-metallic alloy substrate,
wherein the lithium-metal alloy substrate comprises an alloy of lithium (Li) and at least one metal selected from the group consisting of Mg, Ca, Al, Si, Ge, Sn, Pb, As, Sb, Bi, Ag, Zn, Cd, P and Hg, and
wherein an alloy ratio of the lithium and the metal is 4:1 to 1:4 on a weight basis.

2. The lithium free battery according to claim 1, wherein:
the lithium plate layer is formed by charging the lithium free battery.

3. The lithium free battery according to claim 1, wherein:
the lithium-metal alloy substrate comprises an alloy of lithium and at least one metal selected from the group consisting of Si, Ge, Sn, Sb, Mg, Bi, As, Pb, P and Zn.

4. The lithium free battery according to claim 1, wherein:
the lithium-metal alloy substrate has a thickness of 3 *µ*m to 100 *µ*m.

5. The lithium free battery according to claim 4, wherein:
the lithium-metal alloy substrate has a thickness of 5 *µ*m to 40 *µ*m.

6. The lithium free battery according to claim 1, wherein:
the lithium-metal alloy substrate has an alloy ratio of lithium and metal of 2:1 to 1:2 on a weight basis.

7. A method for preparing the lithium free battery of claim 1, the method comprising the steps of:
(a) forming a positive electrode mixture layer on at least one surface of a positive electrode current collector to prepare a positive electrode;
(b) preparing a preliminary negative electrode composed of a lithium-metal alloy substrate which includes an alloy of lithium (Li) and at least one metal selected from the group consisting of Mg, Ca, Al, Si, Ge, Sn, Pb, As, Sb, Bi, Ag, Zn, Cd, P and Hg, and has an alloy ratio of lithium and metal of 4:1 to 1:4 on a weight basis,
(c) disposing a separator between the positive electrode and the preliminary negative electrode to prepare an electrode assembly; and
(d) housing the electrode assembly and the lithium non-aqueous electrolyte in a battery case, sealing the battery case, and then subjecting to the sealed battery case to charging.

8. The method for preparing a lithium free battery according to claim 7, wherein:
the lithium-metal alloy substrate comprises an alloy of lithium and at least one metal selected from the group consisting of Si, Ge, Sn, Sb, Mg, Bi, As, Pb, P and Zn.

9. The method for preparing a lithium free battery according to claim 7, wherein:
the lithium-metal alloy substrate has a thickness of 3 *µ*m to 100 *µ*m.

10. The method for preparing a lithium free battery according to claim 7, wherein:
the lithium-metal alloy substrate has an alloy ratio of lithium and metal of 2:1 to 1:2 on a weight basis.
